# EUROPÄISCHE PATENTSCHRIFT

(11) **EP 3 601 817 B1**
(45) Veröffentlichungstag und Bekanntmachung des Hinweises auf die Patenterteilung: **05.07.2023**
(21) Anmeldenummer: 18712201.5
(22) Anmeldetag: 19.03.2018
(51) Int. Cl.: F16B 21/20, F16C 35/063, F16C 35/067, F16C 25/08, F16F 1/32, B62D 1/00, B62D 1/16

(54) **HALTESCHEIBE**
RETAINING DISC
RONDELLE D'ARRÊT

(30) Priorität: 22.03.2017 DE 102017204762
(43) Veröffentlichungstag der Anmeldung: 05.02.2020
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT)
(74) Vertreter: thyssenkrupp Intellectual Property GmbH
(86) Internationale Anmeldenummer: PCT/EP2018/056866
(87) Internationale Veröffentlichungsnummer: WO 2018/172274

(56) Entgegenhaltungen:
- EP-A1- 1 363 032
- EP-A1- 3 597 977
- DE-A1- 2 419 618
- DE-A1-102011 080 165
- US-A- 2 356 310
- US-A- 4 711 434

## Beschreibung

### Stand der Technik

Die Erfindung betrifft eine Haltescheibe zur axialen Sicherung von einem Bauteil in einem zylindrischen Hohlraum oder auf einer zylindrischen Welle, wobei die Haltescheibe einen vorstehenden Halteabschnitt mit einer Stirnfläche aufweist, wobei die Stirnfläche durch eine Außenkante und Innenkante begrenzt ist, wobei die Außenkante in einem Außenkreis mit einem ersten Mittelpunkt einbeschrieben ist und innerhalb der Innenkante ein Innenkreis mit einem zweiten Mittelpunkt einbeschrieben ist, wobei der erste Mittelpunkt und der zweite Mittelpunkt auf einer Achse liegen, wobei der Halteabschnitt zumindest im Bereich der Stirnfläche gegen die Achse geneigt ist, wobei die Außenkante und/oder Innenkante projiziert in eine Projektionsebene, die parallel zu der Achse ausgebildet ist, mäanderförmig zwischen dem Außenkreis und dem Innenkreis verläuft, wobei der erste Mittelpunkt und der zweite Mittelpunkt einen Abstand voneinander aufweisen.

Eine derartige Haltescheibe, auch als Sperrscheibe bezeichnet, wird eingesetzt, um ein Bauteil wie eine Lageranordnung oder dergleichen in einer zylindrischen Öffnung eines Hohlraums, beispielsweise einem Lagergehäuse, in Richtung der Längsachse, zu sichern und axial abzustützen oder ein Bauteil wie eine Lageranordnung oder dergleichen auf einer zylindrischen Welle oder einer Achse in Richtung der Längsachse zu sichern und axial abzustützen.

Eine Haltescheibe zur Sicherung eines Bauteils in einer zylindrischen Öffnung weist im radialen Außenbereich ihrer Außenkontur einen Halteabschnitt mit mindestens einem, in der Regel mehrere Halteelementen auf, welche an ihrem freien radialen Außenrand jeweils eine schneidenartige Haltekante, in diesem Fall die Außenkante, aufweisen, die sich über einen Teilabschnitt des Umfangs entlang der Außenkontur erstreckt. Der Außendurchmesser der Haltescheibe in entspanntem Zustand, der dem Durchmesser des besagten Außenkreises entspricht, hat Übermaß gegenüber dem freien Innendurchmesser der Zylinderöffnung des Hohlraums, so dass die Haltescheibe beim koaxialen Einsetzen radial elastisch gespannt wird, wodurch die am Umfang angeordneten Haltekanten mit der Spannkraft radial von innen gegen die Innenwandung des zylindrischen Hohlraums gepresst werden und sich dort eingraben, d.h. plastisch einkerben und somit für eine formschlüssige axiale Fixierung der Haltescheibe und eines davon gesicherten Teils sorgen. Dadurch, dass die Haltekante, in diesem Fall die Außenkante, entgegen der Einsetzrichtung an der Haltescheibe gegen die Längsachse geneigt angeordnet ist, d.h. im Winkel angestellt ist, wird eine widerhakenartige Anordnung gebildet, so dass eine entgegen der Einsetzrichtung auf das Halteelement wirkende axiale Stützkraft dafür sorgt, dass die Haltekante noch stärker in radialer Richtung gegen die Innenwandung gepresst wird und sich entsprechend festkrallt, so dass eine besonders sichere Haltewirkung erzeugt wird.

Eine Haltescheibe zur Sicherung eines Bauteils auf einer zylindrischen Welle weist im radialen Innenbereich ihrer Innenkontur einen Halteabschnitt mit mindestens einem, in der Regel mehrere Halteelemente auf, welche an ihrem freien radialen Innenrand jeweils eine schneidenartige Haltekante, in diesem Fall die Innenkante, aufweisen, die sich über einen Teilabschnitt des Umfangs entlang der Innenkontur erstreckt. Der Innendurchmesser der Haltescheibe in entspanntem Zustand, der dem Durchmesser des besagten Innenkreises entspricht, hat Untermaß gegenüber dem freien Außendurchmesser der Welle bzw. der Achse, so dass die Haltescheibe beim koaxialen Aufschieben radial elastisch gespannt wird, wodurch die am Umfang angeordneten Haltekanten mit der Spannkraft radial von außen gegen die Außenfläche der Welle bzw. der Achse gepresst werden und sich dort eingraben, d.h. plastisch einkerben und somit für eine formschlüssige axiale Fixierung der Haltescheibe und eines davon gesicherten Teils sorgen. Dadurch, dass die Haltekante, in diesem Fall die Innenkante, entgegen der Aufsetzrichtung an der Haltescheibe gegen die Längsachse geneigt angeordnet ist, d.h. im Winkel angestellt ist, wird eine widerhakenartige Anordnung gebildet, so dass eine entgegen der Aufsetzrichtung auf das Halteelement wirkende axiale Stützkraft dafür sorgt, dass die Haltekante noch stärker in radialer Richtung gegen die Außenfläche gepresst wird und sich entsprechend festkrallt, so dass eine besonders sichere Haltewirkung erzeugt wird.

Die Haltescheibe übt ihre axiale Stützwirkung entgegen ihrer Einsetzrichtung bzw. Aufsetzrichtung aus, im Folgenden wird daher die Einsetzrichtung bzw. Aufsetzrichtung als die axiale Richtung in Richtung der Längsachse des Hohlraums bzw. der Welle oder Achse definiert, in der die Haltescheibe gegen das zu sichernde Bauteil in den Hohlraum eingesetzt bzw. auf die Welle oder Achse aufgesetzt wird, und die Stützrichtung als die entgegengesetzte axiale Richtung, in der sich das Bauteil nach außen gegen die Haltescheibe abstützt.

Eine derartige Haltescheibe ist beispielsweise aus der DE 103 33 754 B4 bekannt. Diese weist einen Halteabschnitt mit einer Mehrzahl von Halteelementen auf, die als radial nach außen vorstehende Zungen ausgebildet sind, und die durch zum Außenrand hin offene Ausnehmungen im Halteabschnitt in Umfangsrichtung voneinander getrennt sind. Durch die Ausnehmungen können die Halteelemente zur Abstimmung der auf die Haltekante ausgeübten radialen Stützkraft dimensioniert werden. Nachteilig ist jedoch, dass die Zungen an ihren seitlichen Rändern im Übergang zu den Ausnehmungen scharfkantig sind. Die scharfen Kanten können dadurch beim Einsetzen, wenn die Zungen auf der Innenwandung der Zylinderbohrung entlangschaben, Späne bilden, welche die Funktion und die Lebensdauer beeinträchtigen können, oder aber nach der Montage aufwendig entfernt werden müssen.

Weiterhin ist eine Haltescheibe aus der DE 296 10 021 U1 vorbekannt, die zur Sicherung von Bauteilen auf einer Welle oder Achse zum Einsatz kommen kann. Diese Haltescheibe weist einen Halteabschnitt mit einer Mehrzahl von Halteelementen auf, die als radial nach innen vorstehende Zungen ausgebildet sind. Nachteilig ist, dass die Zungen an ihren seitlichen Rändern im Übergang zu den Ausnehmungen scharfkantig sind. Die scharfen Kanten können dadurch beim Aufschieben auf die Welle, wenn die Zungen auf dem Außendurchmesser der Welle entlangschaben, Späne bilden, welche die Funktion und die Lebensdauer beeinträchtigen können, oder aber nach der Montage aufwendig entfernt werden müssen.

Weiterhin tritt im Stand der Technik eine starke Kerbwirkung in der Haltescheibe auf, die zu einer Rissbildung und damit einem Ausfall der Haltefunktion führen kann.

Eine Haltescheibe der eingangs genannten Art ist aus der DE 2 419 618 A1 bekannt. Diese erfordert jedoch einen relativ hohen Aufwand bei der Montage, um eine ausreichende Steifigkeit zu gewährleisten.

Angesichts der vorangehend erläuterten Problematik ist es eine Aufgabe der vorliegenden Erfindung, eine verbesserte Haltescheibe der eingangs genannten Art zur Verfügung zu stellen, welche eine zuverlässige Montage bei einer verbesserten Funktionalität ermöglicht.

### Darstellung der Erfindung

Diese Aufgabe wird dadurch gelöst, dass bei einer Haltescheibe zur axialen Sicherung von einem Bauteil in einem zylindrischen Hohlraum oder auf einer zylindrischen Welle, wobei die Haltescheibe einen vorstehenden Halteabschnitt mit einer Stirnfläche aufweist, wobei die Stirnfläche durch eine Außenkante und Innenkante begrenzt ist, wobei die Außenkante in einem Außenkreis mit einem ersten Mittelpunkt einbeschrieben ist und innerhalb der Innenkante ein Innenkreis mit einem zweiten Mittelpunkt einbeschrieben ist, wobei der erste Mittelpunkt und der zweite Mittelpunkt auf einer Achse liegen, wobei der Halteabschnitt zumindest im Bereich der Stirnfläche gegen die Achse geneigt ist, wobei die Außenkante und/oder Innenkante projiziert in eine Projektionsebene, die parallel zu der Achse ausgebildet ist, mäanderförmig zwischen dem Außenkreis und dem Innenkreis verläuft, wobei der erste Mittelpunkt und der zweite Mittelpunkt einen Abstand voneinander aufweisen, erfindungsgemäß vorgesehen ist, dass ein axialer Abstand zwischen der Außenkante und der Innenkante, gemessen in Richtung der Achse, dem 1,2- bis 3-fachen der Materialdicke der Haltescheibe im Halteabschnitt entspricht.

Durch dieses Verhältnis kann eine sichere Stützwirkung erzielt werden und gleichzeitig eine geringe Einschiebekraft bzw. Aufschiebekraft bei der Montage gewährleistet werden, da die Haltescheibe eine ausreichende Steifigkeit in radialer Richtung, orthogonal zur Achse, aufweist.

Als Teil der Haltescheibe ist der Halteabschnitt als scheibenförmiger Bereich ausgebildet, mit einer Materialdicke, die in der Regel über seine Flächenerstreckung gleich ist. Während im Stand der Technik die Halteelemente durch radiale Ausnehmungen im Haltebereich in Umfangsrichtung voneinander separiert sind unter Bildung von scharfkantigen Ringabschnitten, ist bei der Erfindung die Außenkante und/oder Innenkante projiziert in eine Projektionsebene, die orthogonal oder parallel zu der Achse ausgebildet ist, mäanderförmig zwischen dem Außenkreis und dem Innenkreis verläuft ausgebildet, so dass in Umfangsrichtung eine durchgehende, wellenförmige Außenkante und Innenkante die Stirnfläche begrenzen und somit keine ausgeschnittenen Ausnehmungen zur Separierung der Halteelemente erforderlich sind.

Werden die Außenkante und/oder Innenkante in eine Projektionsebene, die orthogonal oder parallel zu der Achse ausgebildet ist, projiziert, so weist die Außenkante und/oder die Innenkante einen mäanderförmigen Verlauf zwischen dem Außenkreis und dem Innenkreis auf, d.h. die Außenkante und/oder die Innenkante verläuft alternierend auf den Außenkreis und den Innenkreis zu. Unter einem mäanderförmigen Verlauf wird sowohl ein geschwungener, gerundeter Verlauf als auch ein zackenförmiger oder gezackter Verlauf verstanden. Ein zackenförmiger Verlauf der Außenkante und/oder der Innenkante in einer der genannten Projektionsebenen weist zumindest eine Stelle auf, die mathematisch nicht differenzierbar ist, beispielsweise an der Spitze einer Zacke.

Bevorzugt verläuft die Außenkante und/oder Innenkante projiziert in eine erste Projektionsebene, die orthogonal zu der Achse ausgebildet ist, und projiziert in eine zweite Projektionsebene, die parallel zu der Achse ausgebildet ist, mäanderförmig zwischen dem Außenkreis und dem Innenkreis.

Bevorzugt weist die Außenkante und/oder Innenkante einen bogenförmig gerundeten Verlauf aus Wellenbergen und Wellentäler auf. Durch die Abfolge von Wellenbergen und -tälern wird eine in Umfangsrichtung verlaufende Wellenform gebildet.

Anstelle von ausgeschnittenen Ausnehmungen sind radial ausgerichtete Wellentäler in die Fläche des scheibenförmigen Haltebereichs eingeformt, die bevorzugt als langgestreckte, rinnenförmige Vertiefungen ausgebildet sind, die sich in radialer Richtung erstrecken. Die Wellentäler erstrecken sich radial nach außen bzw. nach innen bis zur Stirnfläche, so dass die Außenkante und/oder die Innenkante entsprechend dem Querschnitt der Wellentäler konturiert ist, d.h. über den Umfang in Richtung der Achse, auf denen der erste und der zweite Mittelpunkt liegen, also der Längsachse, gewellt ist. Dabei wird durch die eingeformte Tiefe der Wellentäler die Wellenhöhe vorgegeben.

Bevorzugt entspricht ein axialer Abstand zwischen der Außenkante und der Innenkante, gemessen in Richtung der Achse, dem 1,2- bis 3-fachen der Materialdicke der Haltescheibe im Halteabschnitt.

Durch dieses Verhältnis kann eine sichere Stützwirkung erzielt werden und gleichzeitig eine geringe Einschiebekraft bzw. Aufschiebekraft bei der Montage gewährleistet werden, da die Haltescheibe eine ausreichende Steifigkeit in radialer Richtung, orthogonal zur Achse, aufweist.

Die Wellentäler sind gemäß oben genannter Definition in Stützrichtung, also entgegen der Ein- bzw. Aufsetzrichtung in den Haltebereich eingeformt, und es sind zumindest zwei, bevorzugt mehrere Wellentäler über den Umfang verteilt angeordnet. Dadurch wird in Umfangsrichtung eine Wellenanordnung erzeugt, so dass in den Bereichen zwischen den Wellentälern die besagten Wellenberge stehen bleiben, die entgegen der Stützrichtung vorstehen. In Umfangsrichtung folgen entsprechend abwechselnd vertiefte Wellentäler und vorstehende Wellen zur Bildung einer Wellenanordnung aufeinander, wobei die Tiefe der Einformung der Wellentäler die Wellenhöhe definiert.

Bevorzugt weist der Außenkreis einen ersten Durchmesser D auf und der Innenkreis einen zweiten Durchmesser d, wobei das Verhältnis D/d einen Wert zwischen 1,1 und 1,5 aufweist.

Durch dieses Verhältnis, welches ein Maß für die Höhe der Wellenberge und Wellentäler darstellt, kann eine verbesserte Stützwirkung und reduzierte Montagekraft erzielt werden.

Der Außenkante steht jeweils im Bereich eines Wellenbergs radial nach außen vor. Die Scheitelpunkte der Wellenberge, die jeweils durch den "höchsten Punkt" gebildet werden, sind in den Außenkreis einbeschrieben. Somit bestimmen zumindest die Scheitelpunkte von drei Wellenbergen den Außenkreis. Bevorzugt wird der Außenkreis durch die Scheitelpunkte von fünf Wellenbergen bestimmt. Besonders bevorzugt ist der Außenkreis der Hüllkreis der Wellenberge an der Außenkante. Die Wellentäler weisen einen tiefsten Punkt auf, wobei durch zumindest drei der tiefsten Punkte der Innenkreis bestimmt ist, bevorzugt ist der Innenkreis durch die tiefsten Punkte von fünf Wellentälern bestimmt. Besonders bevorzugt ist der Innenkreis durch den Pferchkreis der Wellentäler der Innenkante gebildet. Der Pferchkreis bezeichnet den Kreis, bei dem alle Punkte des betrachteten Bauteils oder der betrachteten Innenkante außerhalb angeordnet sind.

In der Ausgestaltung der Haltescheibe zur Sicherung eines Bauteils in einer Öffnung ist die Außenkante als Haltekante ausgebildet. Somit kann diese Ausgestaltung so definiert werden, dass die Haltescheibe zur axialen Fixierung von Teilen in einem zylindrischen Hohlraum, die mit ihrer Außenkontur in einen Außenkreis einbeschrieben ist, und die einen Halteabschnitt aufweist mit mindestens einem radial nach außen vorstehenden Halteelement, welches an einem Außenrandabschnitt eine Haltekante aufweist, wobei das Halteelement zumindest im Bereich der Haltekante gegen die Achse des Umkreises geneigt ist, wobei der Halteabschnitt eingeformte Wellentäler in Form von Sicken aufweist, die sich in radialer Richtung erstrecken zur Bildung eines in Umfangsrichtung wellenförmigen Querschnitts, wobei ein in Umfangsrichtung zwischen zwei Sicken begrenzter Wellenberg ein Halteelement bildet.

Bevorzugt ist die Haltekante an einem gerundeten, in radialer Richtung konvex vorstehenden bogenförmigen Wellenberg angeordnet. Dieser kann dadurch realisiert werden, dass durch die Materialverdrängung bei der plastischen Verformung im Übergangsbereich zwischen einem Wellenberg und den diese in Umfangsrichtung begrenzenden Wellentäler der Außenkante in Form einer relativ flachen Biegekurve radial nach innen eingezogen wird, so dass die Haltekante bogenförmig stehen bleibt. Dabei ist vorzugsweise der den Wellenberg außen begrenzende Teilabschnitt der Außenkante bogenförmig geschwungen, wobei der Bogenradius kleiner ist als der Radius des Umkreises der Haltescheibe. Ein Vorteil dieser Bogenform ist, dass die Halteelemente in Umfangsrichtung keine scharfen Kanten aufweisen, und somit Spanbildung beim koaxialen Einsetzen der Haltescheibe in einen zylindrischen Hohlraum zuverlässig vermieden wird.

In der alternativen Ausgestaltung der Haltescheibe zur Sicherung eines auf einer Welle ist die Innenkante als Haltekante ausgebildet.

Bevorzugt weist die Haltekante gerundete, in radialer Richtung konvex vorstehende bogenförmige Wellentäler auf. Dabei ist vorzugsweise der das Wellental innen begrenzende Teilabschnitt der Innenkante bogenförmig geschwungen, wobei der Bogenradius kleiner ist als der Radius des Innenkreises. Ein Vorteil dieser Bogenform ist, dass die Halteelemente in Umfangsrichtung keine scharfen Kanten aufweisen, und somit Spanbildung beim koaxialen Aufschieben der Haltescheibe auf die Welle bzw. der Achse zuverlässig vermieden wird.

Die im entspannten Zustand am weitesten radial nach außen vorstehenden Bereiche der Außenkante der Wellenberge, dies sind gleichzeitig die Maxima der Wellenberge, sind in den Außenkreis mit dem ersten Durchmesser (D) einbeschrieben, und die am weitesten radial nach innen eingezogenen Bereiche der Innenkante der Wellentäler, die sich an den am tiefsten eingeformten Minima, den tiefsten Punkten der Wellentäler befinden, liegen auf dem Innenkreis mit dem zweiten Durchmesser (d), der kleiner ist als besagter erster Durchmesser (D). Die Differenz (D-d) zwischen dem Außendurchmesser (D) und dem Durchmesser (d) definiert die radiale Wellenhöhe (w), welche angibt, wie weit die Haltekante eines Halteelements radial vorsteht.

Die axiale Wellenhöhe (a) der wellenförmigen Anordnung aus Wellentälern und Wellenbergen wird definiert durch den längs in Richtung der Achse gemessene maximale Abstand zwischen der Außenkante und der Innenkante, d.h. dies entspricht der Strecke zwischen dem ersten Mittelpunkt des Außenkreises und dem zweiten Mittelpunkt des Innenkreises.

Bevorzugt weist der Außenkreis einen ersten Durchmesser (D) auf und der Innenkreis weist einen zweiten Durchmesser (d) auf, wobei das Verhältnis D/d einen Wert zwischen 1,1 und 1,5 aufweist. Besonders bevorzugt ist der Wert des Verhältnisses D/d zwischen 1,15 und 1,25.

In der Ausgestaltung der Haltescheibe zur Sicherung eines Bauteils in einer Öffnung ist der erste Durchmesser (D) des Außenkreises größer dimensioniert als der Innendurchmesser (I) eines zylindrischen Hohlraums, und der zweite Durchmesser (d) des Innenkreises wird kleiner bemessen als dieser Innendurchmesser (I). Dadurch kann sichergestellt werden, dass im eingesetzten Zustand nur die mäanderförmige bzw. bogenförmige Haltekante, in diesem Fall die Außenkante, der Halteelemente in Kontakt mit der Innenfläche des Hohlraums kommt und sich dort festsetzt.

In der Ausgestaltung der Haltescheibe zur Sicherung eines Bauteils auf einer Welle ist der zweite Durchmesser (d) des Innenkreises kleiner dimensioniert als der Außendurchmesser der Welle bzw. eines Abschnitts der Welle, der mit der Haltescheibe zusammen wirkt, und der erste Durchmesser (D) des Außenkreises wird größer bemessen als dieser Außendurchmesser. Dadurch kann sichergestellt werden, dass im aufgeschobenen Zustand nur die mäanderförmige bzw. bogenförmige Haltekante, in diesem Fall die Innenkante, der Halteelemente in Kontakt mit der Außenfläche (Mantelfläche) der Welle kommt und sich dort festsetzt.

Ein weiterer Vorteil der erfindungsgemäßen Haltescheibe ist, dass die eingeformten Wellentäler und Wellenberge, so dass die Außenkante und/oder Innenkante projiziert in eine Projektionsebene, die orthogonal oder parallel zu der Achse ausgebildet ist, mäanderförmig zwischen dem Außenkreis und dem Innenkreis verläuft, für eine Erhöhung der Biegesteifigkeit des Halteabschnitts in radialer Richtung sorgen. Um eine definierte Elastizität zu realisieren, welche die Federkraft bestimmt, mit der die Haltekante radial nach außen gegen die Innenwandung des Hohlraums bzw. radial nach innen gegen die Außenfläche der Welle angepresst wird, kann eine geringere Materialstärke des Haltebereichs bzw. der Haltescheibe als Ganzes gewählt werden, beispielsweise durch ein Federstahlblech mit geringerer Dicke, als für die in Umfangsrichtung separierten Haltezungen im Stand der Technik erforderlich ist. Dadurch kann Material und Gewicht eingespart und die Fertigung vereinfacht werden.

Bevorzugt haben die Wellentäler und die Wellenberge einen bogenförmig gerundeten Querschnitt, d.h. die Außenkante und die Innenkante weisen einen bogenförmigen gerundeten Verlauf auf. Dabei ist der Bogen des Querschnitts kleiner als der Außendurchmesser der Haltescheibe. Dadurch kann erreicht werden, dass die Haltekante über den konvex vorstehenden Abschnitt der Außenkante bzw. Innenkante bogenförmig gerundet ist, und in einer stetig geschwungenen Wellenform in den radial nach innen zurückgesetzten Bereich der Außenkante im Bereich der Wellentäler bzw. radial nach außen vorstehenden Bereich der Innenkante im Bereich der Wellenberge übergeht. Auf diese Weise kann die Bildung nachteiliger scharfer Kanten sicher vermieden werden.

Eine vorteilhafte Ausführung sieht vor, dass eine Mehrzahl von Wellentälern und Wellenbergen über den Umfang, bevorzugt gleichmäßig, verteilt angeordnet ist. Dabei verlaufen die Wellentäler und -berge radial strahlenförmig nach außen. Durch die über den Umfang abwechselnd angeordneten Wellentäler und Wellenberge wird eine über den Umfang umlaufende Wellenform realisiert. Durch eine gleichmäßige Verteilung kann eine zur Längsachse rotationssymmetrische Anordnung realisiert werden, welche ein einfaches zentriertes Einsetzen bzw. Aufsetzen und einen sicheren Halt gewährleistet. Im Prinzip kann eine erfindungsgemäße Ausbildung bereits mit zwei Wellentälern realisiert werden, für eine wackelfreie Zentrierung ist es jedoch vorteilhafter, drei oder mehr Wellentäler vorzusehen, wobei die Zahl der Wellentäler nach oben offen ist. Entsprechend der Anzahl der Wellentäler steigt auch die Anzahl der Wellenberge, so dass die zur Verfügung stehende Federkraft auf entsprechend mehr Haltekantenabschnitte verteilt wird. Je nach Anwendung kann die Anzahl der Wellentäler und Wellenberge optimiert werden, und kann in der Praxis beispielsweise zwischen 5 und 20 liegen.

Die Anzahl der Wellentäler und Wellenberge kann bevorzugt ausgehend vom ersten Durchmesser des Außenkreises festgelegt werden. Dabei ist es vorteilhaft, dass der erste Durchmesser (D) des Außenkreises gemessen in Millimetern dem 1- bis 10-fachen der Anzahl der Wellentäler entspricht, beispielsweise können bei einem ersten Durchmesser des Außenkreises von 30 mm bevorzugt zwischen 3 und 30 Wellentälern vorgesehen werden.

Es kann vorgesehen sein, dass die Wellentäler schräg zur Achse eingeformt sind. Dadurch, dass die Wellentäler mit ihrer Längserstreckung nicht nur radial nach außen, sondern in einem Winkel von kleiner als 90° gegen die Längsachse der Haltescheibe geneigt angeordnet sind, ist die radiale Wellenhöhe geometrisch mit der axialen Wellenhöhe verknüpft. Dabei führt eine stärkere Neigung, hin zu einem spitzeren Winkel, zu einer relativ größeren radialen Wellenhöhe. Eine steilere Neigung, die näher bei der senkrechten radialen Anordnung mit 90° liegt, führt dazu, dass eine größere axiale Wellenhöhe bei einer kleineren radialen Wellenhöhe ausgebildet wird.

Es ist möglich, dass der Halteabschnitt eine kegelmantelförmige Grundform hat. Die kegelmantelförmige Grundform wird durch einen Ringabschnitt in Form eines hohlen Kegelmantelstumpfes mit vorgegebener Wandstärke, nämlich der Materialdicke des Halteabschnitts, realisiert, der entgegen der Einsetzrichtung mit dem Kegelwinkel geöffnet ist, d.h. in Einsetzrichtung entsprechend konisch zusammenläuft. In den Kegelmantel sind die Wellentäler eingeformt, zwischen denen entsprechend Wellenberge ausgebildet sind. Dabei können die Wellentäler im Wesentlichen entsprechend dem Kegelwinkel gegen die Achse geneigt sein, oder auch stärker, so dass sie in einem flacheren Winkel zur Längsachse stehen. Ein Vorteil des konischen Halteabschnitts ist, dass bereits durch Einformung von Wellentäler mit geringer Tiefe eine ausreichende radiale Wellenhöhe realisiert werden kann. Ein weiterer Vorteil ist, das die schneidenförmige Haltekante, also der Außenkante bzw. der Innenkante, entsprechend dem Kegelwinkel schräg gegen die Innenwandung des Hohlraums bzw. schräg gegen die Außenfläche der Welle anliegen, so dass der eingangs erläuterte Widerhaken-Halteeffekt entgegen der Einsetzrichtung erzeugt wird. Außerdem ist es vorteilhaft, dass der konische Halteabschnitt zum Einsetzen radial elastisch komprimiert bzw. beim Aufschieben radial elastisch expandiert werden kann, wobei die erfindungsgemäße mäanderförmige Aussenkante und/oder der mäanderförmige Innenkante im Wesentlichen nur in Umfangsrichtung federnd belastet werden. Dadurch kann zum einen beim Einsetzen eine gleichmäßige elastische Verformung praktisch ohne unerwünschte plastische Deformierung sichergestellt werden, zum anderen bleibt die Haltekraft langfristig konstant.

Alternativ ist es ebenfalls denkbar, dass der Halteabschnitt die Grundform einer flachen Ringscheibe hat, in den die Wellentäler bevorzugt schräg geneigt zur Achse eingeformt sind.

Eine Weiterbildung der Erfindung ist, dass die Wellenhöhe im Bereich des radialen Außenrandes größer ist als im radialen Innenbereich des Halteabschnitts. Dadurch kann am Außenrand die Ausbildung der Halteelemente im Hinblick auf die Haltewirkung optimiert werden, während die Wellentäler im radialen Innenbereich flacher auslaufen können, um einen Übergang zu einem Stützabschnitt zu erzeugen.

Bevorzugt weist die Haltescheibe einen Stützabschnitt auf, der bevorzugt als Stützring ausgebildet ist, welcher koaxial innerhalb des Halteabschnitts ausgebildet ist. Der Stützabschnitt, der beispielsweise als Stützring ausgebildet ist, kann radial innerhalb bzw. radial außerhalb des Halteabschnitts angeordnet sein, und weist eine in Einsetzrichtung stirnseitige axiale Anschlagfläche auf, welche mit einem abzusichernden Bauteil zur Anlage gebracht werden kann.

Der Stützabschnitt kann bevorzugt eine in axialer Richtung eingeformte, umlaufende Ringsicke aufweisen. Dadurch wird die Steifigkeit des Stützabschnitts und damit der Haltescheibe erhöht, wobei in vorteilhafter Weise eine geringere Materialdicke eingesetzt werden kann.

Bevorzugt ist die Haltescheibe als Stanz-Pressteil ausgebildet, vorzugsweise aus Federstahlblech. Dabei kann die Fertigung einstückig aus einem Blechabschnitt erfolgen, der bevorzugt als kreisringförmiges Stanzteil bereitgestellt wird, und in den in den Halteabschnitt die Wellentäler und Wellenberge plastisch eingepresst werden, und auch der Stützring eingeformt wird, beispielsweise auch mit einer umlaufenden Ringsicke. Dabei ist es möglich, dem Halteabschnitt kegelmantelförmig auszubilden, so dass die Haltekanten wie vorangehend erläutert schräg gegen die Längsachse ausgerichtet sind. Die Fertigung als Stanz-Press-Teil ist rationell möglich, wobei zum einen die Haltekanten durch eine scharfe Stanzkontur realisiert werden kann, und zum anderen durch die erfindungsgemäß eingeformten Wellentäler die Halteelemente keine bei der Montage nachteiligen scharfen Kanten aufweisen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule in einer perspektivischen Ansicht,
- Figur 2: ein teilweiser Längsschnitt durch die Lenksäule gemäß Figur 1,
- Figur 3: eine vergrößerte Detailansicht des Längsschnitts gemäß Figur 2,
- Figur 4: einen Längsschnitt durch einen Verstellantrieb der Lenksäule gemäß Figur 1,
- Figur 5: eine erfindungsgemäße Haltescheibe in einer ersten Ausführungsform in einer perspektivischen Ansicht,
- Figur 6: eine Ansicht der Haltescheibe in der ersten Ausführungsform gemäß Figur 5 in Richtung der Achse,
- Figur 7: eine Seitenansicht der Haltescheibe in der ersten Ausführungsform gemäß Figur 5 und 6,
- Figur 8: einen Längsschnitt durch die Haltescheibe in der ersten Ausführungsform gemäß Figuren 5 bis 7,
- Figur 9: eine weitere Ansicht der Haltescheibe in der ersten Ausführungsform gemäß den Figuren 5 bis 8 in Richtung der Achse,
- Figur 10: eine vergrößerte Detailansicht des Längsschnitts ähnlich der Figur 3 mit der Haltescheibe in der ersten Ausführungsform und eine Haltescheibe in einer zweiten Ausführungsform,
- Figur 11: eine nicht erfindungsgemäße Haltescheibe in einer perspektivischen Ansicht,
- Figur 12: einen Längsschnitt durch die Haltescheibe in der zweiten Ausführungsform gemäß Figur 11,
- Figur 13: eine Ansicht der Haltescheibe in der zweiten Ausführungsform gemäß den Figuren 11 und 12 in Richtung der Achse.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

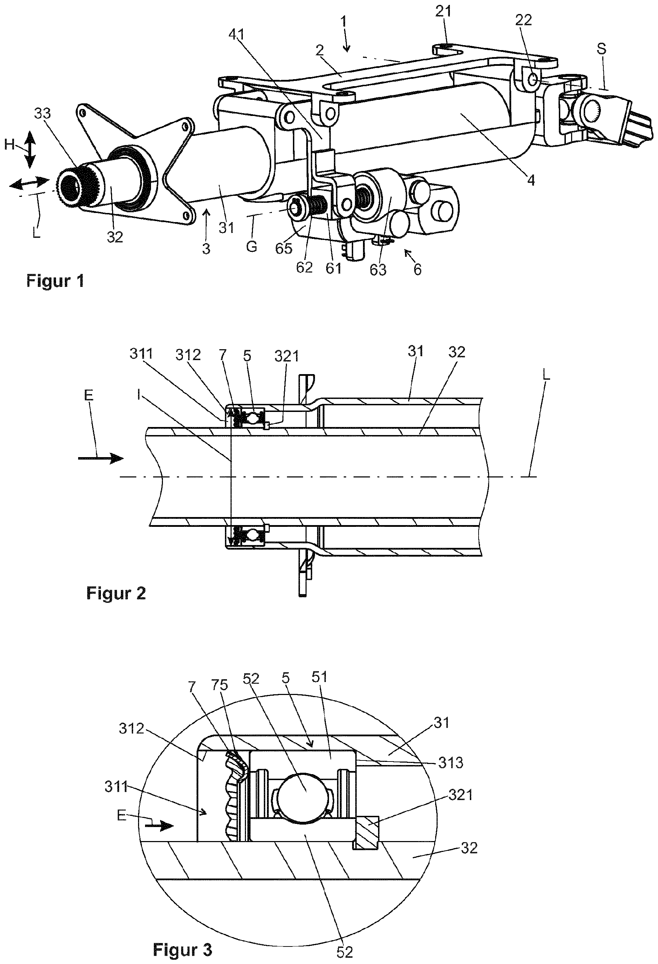

Figur 1 zeigt eine erfindungsgemäße Lenksäule 1 in einer schematischen perspektivischen Ansicht schräg von oben auf das hintere Ende, bezogen auf die Fahrtrichtung eines nicht dargestellten Fahrzeugs, wo ein hier nicht dargestelltes Lenkrad im Bedienungsbereich gehalten wird.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten FahrzeugKarosserie. Von der Trageinheit 2 wird eine Stelleinheit 3 gehalten, die in einer Manteleinheit 4 - auch als Führungskasten oder Kastenschwinge bezeichnet-aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet ist.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines motorischen Stellantriebs 6 kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Der Verstellantrieb 6 ist zur Verstellung in Höhenrichtung H an der Lenksäule 1 angebracht, und umfasst eine Spindelmutter 61, in deren Innengewinde längs einer Achse G eine Gewindespindel 62 eingreift. Die Gewindespindel 62 ist in einem Lagergehäuse 63, welches an der Manteleinheit 4 befestigt ist, drehbar um die Achse G gelagert und axial, in Richtung der Achse G, an der Manteleinheit 4 abgestützt, und von einem elektrischen Stellmotor 65 wahlweise in beide Rotationsrichtungen um die Achse G drehend antreibbar.

Die Spindelmutter 61 ist bezüglich einer Drehung um die Achse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Mantel-einheit 4 verbunden ist.

Durch Drehung der Gewindespindel 61 kann - je nach Drehrichtung des Stellmotors 65 - die Spindelmutter 61 in Richtung der Achse G translatorisch relativ zur Gewindespindel 62 verlagert werden, so dass entsprechend die über den Stellhebel 41 mit der Spindelmutter 41 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet ist.

Figur 2 zeigt einen Schnitt entlang der Längsachse L durch die Stelleinheit 3, in der die Lenkspindel 32 in einem hinteren Endabschnitt des Mantelrohrs 31 in einem Wälzlager 5 gelagert ist, welches einen Außenring 51, einen Innenring 52 und dazwischen in Umfangsrichtung abwälzbare Kugeln 53 aufweist. Der Außenring 51 ist koaxial in eine zylindrische Öffnung 311 eingesetzt und liegt darin radial an der Innenfläche 312 an, wie aus der vergrößerten Darstellung von Figur 3 deutlich erkennbar ist. In einer Einsetzrichtung E, die parallel zur Längsachse L gerichtet ist, stützt sich der Außenring 51 gegen ein axiales Widerlager 313 in Form einer umlaufenden Ringschulter ab. Der Innenring 52 sitzt fest auf der Lenkspindel 32, wo er sich in Einsetzrichtung E gegen ein axiales Widerlager 321 abstützt, welches beispielsweise durch einen Sicherungsring gebildet wird.

Auf der dem Widerlager 313 gegenüberliegenden Axialseite wird der Außenring 51 von einem erfindungsgemäßen Haltering 7, der in der Öffnung 311 fixiert ist, gehalten und entgegen der Einsetzrichtung gestützt und somit in der axialen Lagerposition relativ zum Widerlager 313 gesichert.

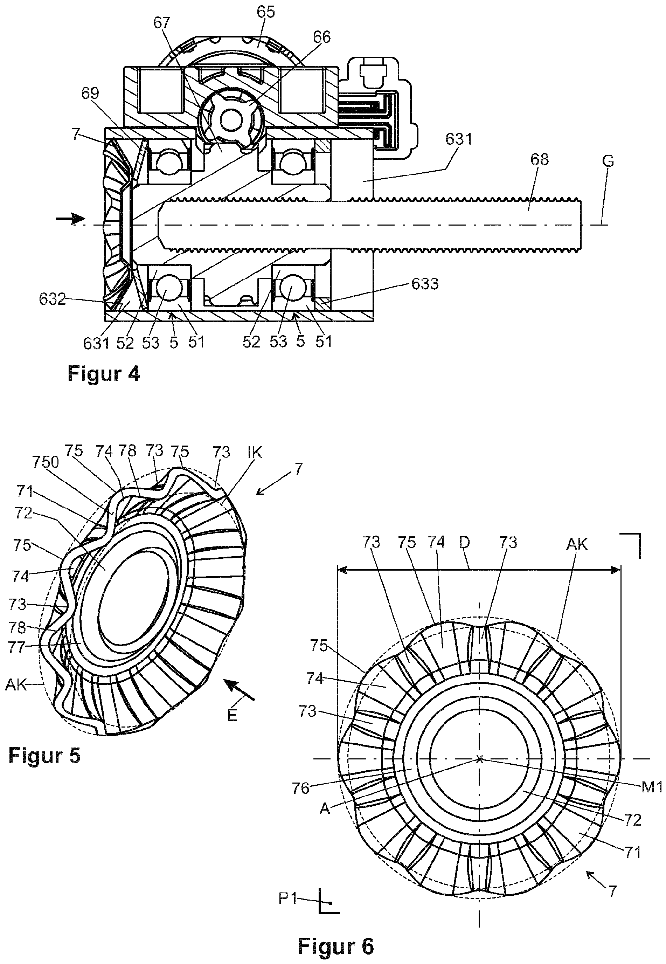

Der Haltering 7 ist in den Darstellungen der Figuren 5 bis 9 näher erläutert. Wie die axiale Stirnansicht in Figur 6 deutlich zeigt, wobei die Darstellungsebene der Figur 6 orthogonal zur Achse A ist und parallel zu einer ersten Projektionsebene P1 ist, hat der Haltering 7 eine kreisringförmige Grundform mit einer Achse A, die in der Einbausituation von Figur 2 und 3 mit der Längsachse L zusammenfällt. In seinem radial äußeren Bereich weist der Haltering 7 einen ringförmig umlaufenden Halteabschnitt 71 auf, in dem koaxial ein damit fest verbundener, ebenfalls ringförmiger Stützabschnitt 72 angeordnet ist.

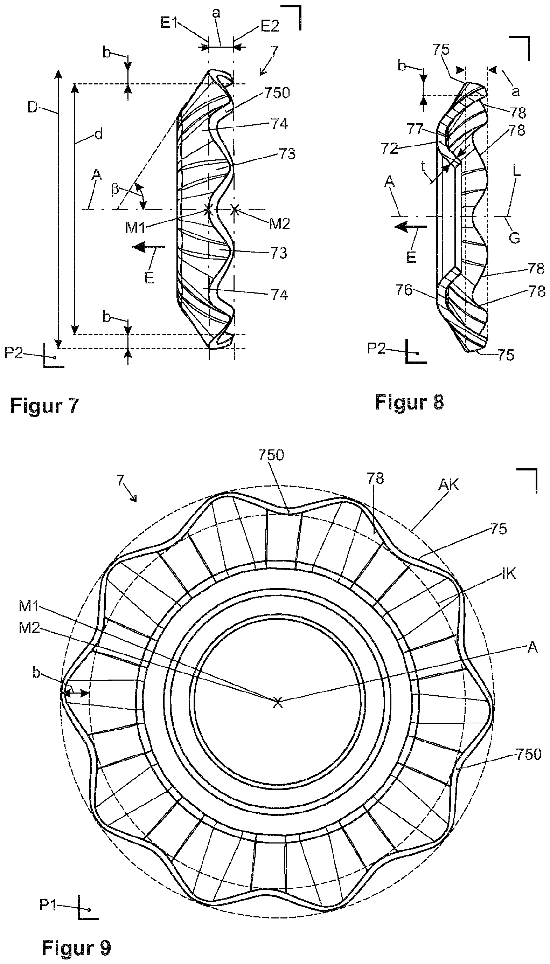

Wie aus Figur 7 und 8 ersichtlich ist, ist der Halteabschnitt 71 in seiner Grundform kegelmantelförmig ausgebildet, mit einem Kegelwinkel β (beta). Bezogen auf seine Orientierung im eingebauten Zustand gemäß Figur 2 und 3 läuft der Halteabschnitt 72 in Einsetzrichtung E im Querschnitt schräg zur Achse A zusammen. Die Darstellungsebene der Figuren 7 und 8 ist parallel zur Achse A, wobei die Darstellungsebene der Figuren 7 und 8 parallel zu einer zweiten Projektionsebene P2 ist.

Die Figur 9, in der die Darstellungsebene der Figur 9 orthogonal zur Achse A ist, wobei die Darstellungsebene der Figur 9 parallel zu einer ersten Projektionsebene P1 ist, zeigt den Haltering 7 von der zweiten Stirnansicht, wobei die Stirnseite 750 dem Betrachter zugewandt ist.

Die Haltescheibe 7 weist an dem Halteabschnitt 71 die Stirnfläche 750 auf, wobei die Stirnfläche 750 durch eine Außenkante 75 und Innenkante 78 begrenzt ist. Die Außenkante 75 ist in einem Außenkreis AK einbeschrieben, wobei der Außenkreis einen ersten Mittelpunkt M1 aufweist. Ein Innenkreis IK ist innerhalb der Innenkante 78 einbeschrieben, wobei der Innenkreis IK einen zweiten Mittelpunkt M2 aufweist. Der erste Mittelpunkt M1 des Außenkreises AK und der zweite Mittelpunkt M2 des Innenkreises IK liegen auf der Achse A. Der Halteabschnitt 71 ist zumindest im Bereich der Stirnfläche 750 gegen die Achse A geneigt. Erfindungsgemäß verlaufen die Außenkante 75 und die Innenkante 78, wenn diese in die Projektionsebene P1, die orthogonal zu der Achse A ausgebildet ist und somit der Darstellungsebene der Figuren 6 und 9 entspricht, projiziert sind, mäanderförmig zwischen dem Außenkreis AK und dem Innenkreis IK.

Weiterhin verlaufen die Außenkante 75 und die Innenkante 78, wenn diese in die Projektionsebene P2, die parallel zu der Achse A ausgebildet ist und somit der Darstellungsebene der Figuren 7 und 8 entspricht, projiziert sind, mäanderförmig zwischen dem Außenkreis AK und dem Innenkreis IK.

Der Halteabschnitt 71 weist langgestreckte Sicken 73 auf, die schräg zur Achse A eingeformt sind, rinnenförmig mit einem gebogenen Querschnitt ausgebildet sind und strahlenförmig radial zur Achse A verlaufen. Zwischen den eingeformten Sicken 73 sind Wellen 74 ausgebildet, so dass eine in Umfangsrichtung umlaufende Wellenform gebildet wird, wobei die Sicken 73 gegen die Einsetzrichtung gesehen die Wellentäler 73 formen, und entsprechend die Wellen 74 die Wellenberge.

Wie insbesondere die seitlichen Ansichten von Figur 7 und 8 zeigen, sind die Sicken 73 (Wellentäler) derart schräg zur Achse in den konischen Halteabschnitt 71 eingeformt, dass am Außenrand der Haltescheibe 7 eine axiale Wellenhöhe a gemessen in Richtung der Achse A erzeugt wird, und in radialer Richtung eine radiale Wellenhöhe b. Die Wellenhöhe a entspricht dem axialen Abstand a zwischen dem Außenkreis AK und dem Innenkreis IK. Der Außenkreis AK liegt in einer Ebene E1, die orthogonal zur Achse A ist. Der Innenkreis IK liegt in einer Ebene E2, die orthogonal zur Achse A ist, wobei die Ebene E1 und die Ebene E2 den Abstand a aufweisen. Die Ebene E1 und die Ebene E2 sind parallel zur Projektionsebene P1. Die radiale Wellenhöhe b ist der radiale Abstand b, gemessen in radialer Richtung, d.h. orthogonal zur Achse A, zwischen dem Außenkreis AK und dem Innenkreis IK. Somit entspricht der radiale Abstand b der Hälfte der Durchmesserdifferenz zwischen Außenkreis AK und Innenkreis IK. Somit verläuft die Außenkante 75 und die Innenkante 78, wenn diese in die Projektionsebene P2, die parallel zu der Achse A ausgebildet ist und somit der Darstellungsebene der Figuren 7 und 8 entspricht, projiziert ist, mäanderförmig zwischen der Ebene E1 und E2.

Der im Bereich der Wellen 74 (Wellenberge) vorstehende Außenrandabschnitt der Außenkante 75 wird von dem Außenkreis AK mit dem ersten Durchmesser D eingeschlossen, und in dem Innenrandabschnitt im Bereich der Sicken 73 (Wellentäler) ist ein Innenkreis IK mit einem zweiten Durchmesser d einbeschrieben, wie aus Figur 7 und 9 erkennbar.

Die Außenkante 75 ist als eine scharfkantig nach außen vorstehende, schneidenartige Haltekante 75 ausgebildet. In Figur 7 und 8 ist deutlich erkennbar, wie diese als Haltekante ausgebildete Außenkante 75 radial nach außen vorsteht, und zwar schräg zur Achse A im Kegelwinkel β (=beta) entgegen der Einsetzrichtung E. Dadurch bilden die Wellenberge 74 die Halteelemente der Haltescheibe 7. Dabei wird die über den Umfang wellenförmig umlaufende als Haltekante ausgebildete Außenkante 75 realisiert, die bogenförmig geschwungen sind, und die keine zusätzlichen nachteiligen scharfen Ecken wie die aus dem Stand der Technik bekannten Federzungen aufweisen.

Radial nach innen laufen die Wellentäler 73 flach aus, dabei nehmen die Wellenhöhen a und b ab, bis der Halteabschnitt 71 am Übergang zum Stützabschnitt 72 eine ungewellte, ebene Form hat. Der Stützabschnitt 72 selbst hat stirnseitig in Einsetzrichtung E vorn eine ringförmig umlaufende, ebene Stützfläche 76. Die Steifigkeit des Stützabschnitts 72 wird erhöht durch eine von der Einsetzrichtung E her eingeformte kreisförmig umlaufende Ringsicke 77.

Die Haltescheibe 7 ist bevorzugt aus einem ringförmigen Blechzuschnitt mit einer Materialdicke t, bevorzugt aus Federstahl, als einstückiges Stanz-Press-Teil gefertigt. Dabei ist es besonders vorteilhaft, dass die radiale Wellenhöhe a etwa dem 1,2- bis 3-fachen der Materialdicke der Haltescheibe 7 im Halteabschnitt 71 entspricht.

In der Anwendung gemäß Figur 2 und 3 hat die Öffnung 311 einen Innendurchmesser I, der kleiner ist als der erste Durchmesser D des Außenkreises, aber größer als der zweite Durchmesser d des Innenkreises. Beim Einsetzen in Einsetzrichtung E wird die Haltescheibe 7 koaxial in die Öffnung 311 eingeschoben, bis die Stützfläche 76 axial gegen den Außenring 51 des Lagers 5 anschlägt. In dieser Halteposition wird die als Haltekante ausgebildete Außenkante 75 durch die Elastizität der Haltescheibe 7 radial von innen in die Innenfläche 312 eingedrückt, wo sie sich einkerbt und die Haltescheibe 7 sich formschlüssig festkrallt. Wirkt durch Belastungen im Betrieb von dem Lager 5 eine axiale Kraft entgegen der Einsetzrichtung E nach außen, wird die auf die als Haltekante ausgebildete Außenkante 75 wirkende radiale Haltekraft durch die widerhakenartig-konische Ausbildung des Halteabschnitts 71 mit den im Kegelwinkel β angestellten Halteelementen noch verstärkt. Die Haltescheibe 7 hat somit eine selbstsichernde Wirkweise. Je größer die axiale Kraft entgegen der Einsetzrichtung E, desto mehr gräbt sich die Außenkante 75 in das Material der Innenfläche 312 ein.

Figur 4 zeigt eine weitere Einsatzmöglichkeit eines erfindungsgemäßen Halterings 7 zur Sicherung einer Lageranordnung in dem Lagergehäuse 63 des Verstellantriebs 6. Dabei ist ein von dem Motor 65 über eine Schnecke 66 um eine Drehachse G antreibbares Schneckenrad 67, welches mit einer Spindel 68 verbunden ist, in Wälzlagern 5 gelagert, die in eine zylindrische Öffnung 631 des Lagergehäuses 63 eingesetzt sind. Die zylindrische Öffnung 631 hat eine Innenfläche 632.

Ein erfindungsgemäßer Haltering 7 ist in Einsetzrichtung E mit seiner Achse A koaxial zur Drehachse G in die Öffnung 631 eingesetzt, und belastet in Einsetzrichtung E über eine Tellerfeder 69 das eine Wälzlager 5, welches sich über das Schneckenrad 67 und das andere Wälzlager 5 gegen ein in der Öffnung 631 befestigtes Widerlager 633 entgegen der Einsetzrichtung axial abstützt. In dieser Anordnung wird durch die Tellerfeder 69 der Haltering 7 ständig entgegen der Einsetzrichtung E axial belastet, wobei der Haltering 7 aufgrund des oben beschriebenen Widerhaken-Effekts eine besonders sichere Haltewirkung erzeugt.

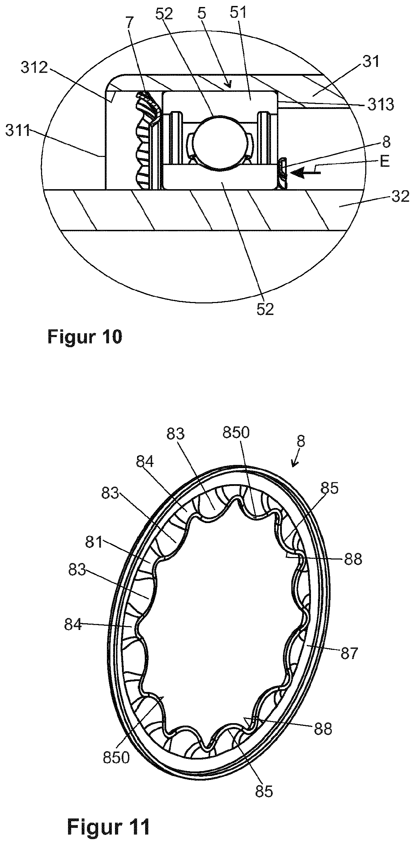

In den Figuren 10 bis 13 ist ein Haltering 8 in einer zweiten Ausführungsform dargestellt, wobei dieser Haltering 8 zur Sicherung in axialer Richtung von einem Bauteil auf einer zylindrischen Welle, bevorzugt einer kreiszylindrischen Welle dient.

Figur 10 zeigt einen vergrößerten Schnitt ähnlich der Figur 3, wobei eine Lenksäule ähnlich der aus der Figur 1 bekannten Lenksäule 1, entlang der Längsachse L durch die Stelleinheit 3 geschnitten ist. Die Lenkspindel 32 ist in einem hinteren Endabschnitt des Mantelrohrs 31 in einem Wälzlager 5 gelagert, welches einen Außenring 51, einen Innenring 52 und dazwischen in Umfangsrichtung abwälzbare Kugeln 53 aufweist. Der Außenring 51 ist koaxial in eine zylindrische Öffnung 311 eingesetzt und liegt darin radial an der Innenfläche 312 an. In einer Einsetzrichtung E, die parallel zur Längsachse L gerichtet ist, stützt sich der Innenring 52 gegen den Haltering 8 ab. Der Haltering 8 sichert somit das Wälzlager 5 in axialer Richtung auf der als Lenkspindel 32 ausgebildeten Welle.

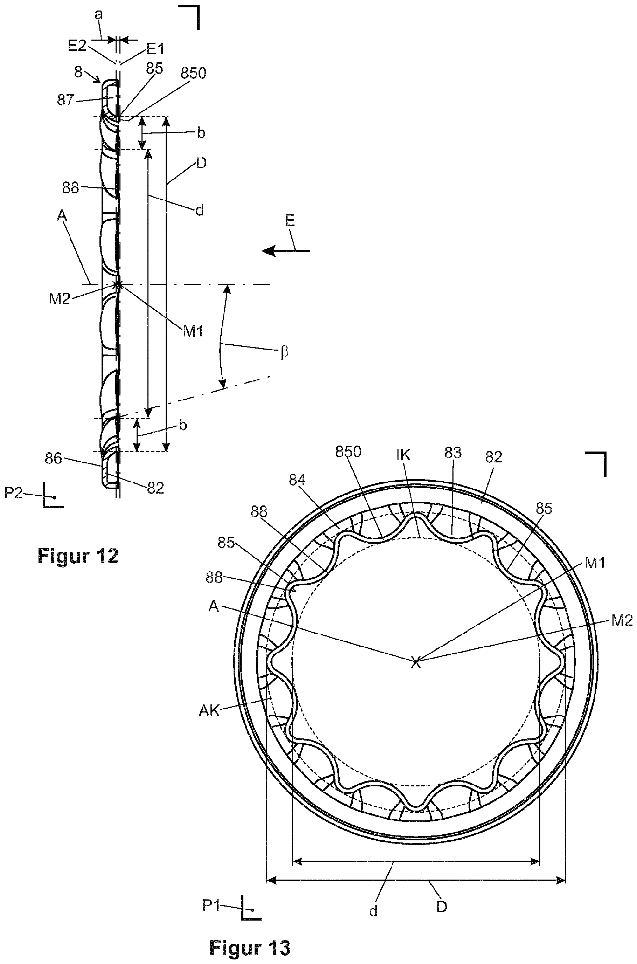

Der Haltering 8 ist in den Darstellungen der Figuren 11 bis 13 näher erläutert. Wie die axiale Stirnansicht in Figur 13 deutlich zeigt, wobei die Darstellungsebene der Figur 13 orthogonal zur Achse A ist, wobei die Darstellungsebene der Figur 13 parallel zu einer ersten Projektionsebene P1 ist, hat der Haltering 8 eine kreisringförmige Grundform mit einer Achse A, die in der Einbausituation von Figur 10 mit der Längsachse L zusammenfällt. In seinem radial inneren Bereich weist der Haltering 8 einen ringförmig umlaufenden Halteabschnitt 81 auf, in dem koaxial ein damit fest verbundener, ebenfalls ringförmiger Stützabschnitt 82 angeordnet ist. Der Haltering 8 umfasst eine Stirnseite 850, die in der Figur 13 dem Betrachter zugewandt ist.

Wie aus Figur 12 ersichtlich ist, ist der Halteabschnitt 71 in seiner Grundform kegelmantelförmig ausgebildet, mit einem Kegelwinkel β (beta). Bezogen auf seine Orientierung im eingebauten Zustand gemäß 12 läuft der Halteabschnitt 72 in Einsetzrichtung E im Querschnitt schräg zur Achse A auseinander. Die Darstellungsebene der Figuren 12 ist parallel zur Achse A, wobei die Darstellungsebene der Figuren 12 parallel zu einer zweiten Projektionsebene P2 ist.

Die Haltescheibe 8 weist der Halteabschnitt 81 die Stirnfläche 850 auf, wobei die Stirnfläche 850 durch eine Außenkante 85 und eine Innenkante 88 begrenzt ist. Die Außenkante 85 ist in einen Außenkreis AK einbeschrieben, wobei der Außenkreis AK einen ersten Mittelpunkt M1 aufweist. Ein Innenkreis IK ist innerhalb der Innenkante 88 einbeschrieben, wobei der Innenkreis IK einen zweiten Mittelpunkt M2 aufweist. Der erste Mittelpunkt M1 des Außenkreises AK und der zweite Mittelpunkt M2 des Innenkreises IK liegen auf der Achse A. Der Halteabschnitt 81 ist zumindest im Bereich der Stirnfläche 850 gegen die Achse A geneigt. Die Außenkante 85 und die Innenkante 88 verlaufen, wenn diese in die Projektionsebene P1, die orthogonal zu der Achse A ausgebildet ist und somit der Darstellungsebene der Figur 13 entspricht, projiziert sind, mäanderförmig zwischen dem Außenkreis AK und dem Innenkreis IK.

Weiterhin verläuft die Außenkante 85 und Innenkante 88, wenn diese in die Projektionsebene P2, die parallel zu der Achse A ausgebildet ist und somit der Darstellungsebene der Figuren 12 entspricht, projiziert ist, mäanderförmig zwischen dem Außenkreis AK und dem Innenkreis IK.

Die Wellenhöhe a ist der axiale Abstand a zwischen dem Außenkreis AK und dem Innenkreis IK. Der Außenkreis AK liegt in einer Ebene E1, die orthogonal zur Achse A ist. Der Innenkreis IK liegt in einer Ebene E2, die orthogonal zur Achse A ist, wobei die Ebene E1 und die Ebene E2 den Abstand a aufweisen. Die Ebene E1 und die Ebene E2 sind parallel zur Projektionsebene P1. Die radiale Wellenhöhe b ist der radiale Abstand b, gemessen in radialer Richtung, d.h. orthogonal zur Achse A, zwischen Außenkreis AK und dem Innenkreis IK. Somit entspricht der radiale Abstand b der Hälfte der Durchmesserdifferenz zwischen Außenkreis AK und Innenkreis IK.

In der Figur 12 und 13 ist deutlich erkennbar, wie die als Haltekante ausgebildete Innenkante 88 radial nach innen vorsteht, und zwar schräg zur Achse A im Kegelwinkel β mit der Einsetzrichtung E. Dadurch bilden die Wellentäler 88 die Halteelemente der Haltescheibe 8. Dabei wird die über den Umfang wellenförmig umlaufende als Haltekante ausgebildete Innenkante 88 realisiert, die bogenförmig geschwungen sind, und die keine zusätzlichen nachteiligen scharfen Ecken wie eine aus dem Stand der Technik bekannten Federzungen aufweisen.

Dadurch, dass die Außenkante 75, 85 und die Innenkante 78, 88 wellenförmig-gebogen ausgebildet sind, wird nachteilige Spanbildung beim Einsetzen des Halterings 7, 8 vermieden. Durch die Wellenform mit den eingeformten Wellentälern 73 und Wellenbergen 74 hat der Haltering 7, 8 eine hohe Steifigkeit, und kann mit einer im Vergleich zum Stand der Technik geringeren Materialdicke h gefertigt werden. Dabei ist eine rationelle Fertigung als Stanz-Press-Teil aus Federstahlblech möglich.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 311: Öffnung
- 312: Innenfläche
- 313: Widerlager
- 32: Lenkspindel
- 321: Widerlager
- 33: Befestigungsabschnitt
- 34: Übertragungselement
- 4: Manteleinheit
- 41: Stellhebel
- 42: Durchgangsöffnung
- 5: Wälzlager
- 51: Außenring
- 52: Innenring
- 55: Kugeln
- 6: Verstellantrieb
- 61: Spindelmutter
- 62: Gewindespindel
- 63: Lagergehäuse
- 631: Öffnung
- 632: Innenfläche
- 633: Widerlager
- 65: Stellmotor
- 66: Schnecke
- 67: Schneckenrad
- 68: Spindel
- 69: Tellerfeder
- 7, 8: Haltering
- 71, 81: Halteabschnitt
- 72, 82: Stützabschnitt
- 73, 85: Wellental (Sicke)
- 74, 84: Wellenberg (Welle)
- 75, 85: Außenkante
- 76, 86: Stützfläche
- 77, 87: Ringsicke
- 78, 88: Innenkante
- 750, 850: Stirnfläche
- A: Achse
- L: Längsachse
- H: Höhenrichtung
- IK: Innenkreis
- AK: Außenkreis
- G: Achse (Gewindespindelachse)
- β: Kegelwinkel
- a: axiale Wellenhöhe
- b: radiale Wellenhöhe
- D: erster Durchmesser des Außenkreises
- d: zweiter Durchmesser des Innenkreises
- t: Materialdicke

## Patentansprüche

1. Haltescheibe (7, 8) zur axialen Sicherung von einem Bauteil in einem zylindrischen Hohlraum oder auf einer zylindrischen Welle, wobei die Haltescheibe (7, 8) einen vorstehenden Halteabschnitt (71, 81) mit einer Stirnfläche (750, 850) aufweist, wobei die Stirnfläche (750, 850) durch eine Außenkante (75, 85) und Innenkante (78, 88) begrenzt ist, wobei die Außenkante (75, 85) in einem Außenkreis (AK) mit einem ersten Mittelpunkt (M1) einbeschrieben ist und innerhalb der Innenkante (78, 88) ein Innenkreis (IK) mit einem zweiten Mittelpunkt (M2) einbeschrieben ist, wobei der erste Mittelpunkt (M1) und der zweite Mittelpunkt (M2) auf einer Achse (A) liegen, wobei der Halteabschnitt (71, 81) zumindest im Bereich der Stirnfläche (750, 850) gegen die Achse (A) geneigt ist,
die Außenkante (75, 85) und/oder Innenkante (78, 88) projiziert in eine Projektionsebene (P2), die parallel zu der Achse (A) ausgebildet ist, mäanderförmig zwischen dem Außenkreis (AK) und dem Innenkreis (IK) verläuft, wobei der erste Mittelpunkt (M1) und der zweite Mittelpunkt (M2) einen Abstand voneinander aufweisen,
**dadurch gekennzeichnet,**
**dass** ein axialer Abstand (a) zwischen der Außenkante (75, 85) und der Innenkante (78, 88), gemessen in Richtung der Achse (A), dem 1,2- bis 3-fachen der Materialdicke (t) der Haltescheibe (7) im Halteabschnitt (71) entspricht.

2. Haltescheibe (7, 8) nach Anspruch 1, **dadurch gekennzeichnet, dass** die Außenkante (75) und/oder Innenkante (78, 88) projiziert in eine erste Projektionsebene (P1), die orthogonal zu der Achse (A) ausgebildet ist, und projiziert in eine zweite Projektionsebene (P2), die parallel zu der Achse (A) ausgebildet ist, mäanderförmig zwischen dem Außenkreis (AK) und dem Innenkreis (IK) verläuft.

3. Haltescheibe (7, 8) nach Anspruch 1 oder 2, **dadurch gekennzeichnet, dass** die Aussenkante (75, 85) und/oder Innenkante (78, 88) einen bogenförmig gerundeten Verlauf aus Wellenbergen (74, 84) und Wellentälern (73, 85) haben.

4. Haltescheibe (7, 8) nach einem der vorangehenden Ansprüche, **dadurch gekennzeichnet, dass** Außenkreis (AK) einen ersten Durchmesser (D) aufweist und der Innenkreis (IK) einen zweiten Durchmesser (d), wobei das Verhältnis D/d einen Wert zwischen 1,1 und 1,5 aufweist.

5. Haltescheibe (7, 8) nach Anspruch 4, **dadurch gekennzeichnet, dass** der erste Durchmesser (D) des Aussenkreises (AK) gemessen in Millimetern zur Anzahl der Wellentäler (73, 83) in einem Verhältnis zwischen 1:1 und 10:1 steht.

6. Haltescheibe (7, 8) nach einem der vorangehenden Ansprüche, **dadurch gekennzeichnet, dass** die Wellentäler (75, 85) schräg zur Achse (A) eingeformt sind.

7. Haltescheibe (7, 8) nach einem der vorangehenden Ansprüche, **dadurch gekennzeichnet, dass** der Halteabschnitt (71, 81) eine kegelmantelförmige Grundform hat.

8. Haltescheibe (7, 8) nach einem der vorangehenden Ansprüche, **dadurch gekennzeichnet, dass** der Halteabschnitt (71, 81) in einen radial innen liegenden oder radial außen liegenden Stützabschnitt (72, 82) übergeht.

9. Haltescheibe (7, 8) nach Anspruch 8, **dadurch gekennzeichnet, dass** der Stützabschnitt (72, 82) eine zumindest abschnittweise in Umfangsrichtung umlaufende Ringsicke (77, 87) aufweist.

10. Verwendung einer Haltescheibe (7, 8) nach einem der vorangehenden Ansprüche, **dadurch gekennzeichnet, dass** die Haltescheibe (7, 8) unter radialer Vorspannung koaxial in einen innenzylindrischen zylindrischen Hohlraum (311) einer Lenkungsansordnung (1) eingesetzt ist und eine Lageranordnung eines rotierend gelagerten Elements eines axial abstützt.

## Claims

1. Holding disc (7, 8) for axially securing a component in a cylindrical cavity or on a cylindrical shaft, wherein the holding disc (7, 8) has a protruding holding portion (71, 81) with an end face (750, 850), wherein the end face (750, 850) is delimited by an outer edge (75, 85) and an inner edge (78, 88), wherein the outer edge (75, 85) is inscribed in an outer circle (AK) with a first centre point (M1) and an inner circle (IK) with a second centre point (M2) is inscribed within the inner edge (78, 88), where the first centre point (M1) and the second centre point (M2) lie on an axis (A), wherein the holding portion (71, 81) is inclined with respect to the axis (A) at least in the region of the end face (750, 850), and
the outer edge (75, 85) and/or the inner edge (78, 88), when projected into a projection plane (P2) which is parallel to the axis (A), extend(s) in a meandering manner between the outer circle (AK) and the inner circle (IK), wherein the first centre point (M1) and the second centre point (M2) are at a distance from one another,
**characterized**
**in that** an axial distance (a) between the outer edge (75, 85) and the inner edge (78, 88) measured in the direction of the axis (A) corresponds to 1.2 to 3 times the material thickness (t) of the holding disc (7) in the holding portion (71).

2. Holding disc (7, 8) according to Claim 1, **characterized in that** the outer edge (75) and/or the inner edge (78, 88), when projected into a first projection plane (P1) which is orthogonal to the axis (A) and when projected into a second projection plane (P2) which is parallel to the axis (A), extend(s) in a meandering manner between the outer circle (AK) and the inner circle (IK).

3. Holding disc (7, 8) according to Claim 1 or 2, **characterized in that** the outer edge (75, 85) and/or the inner edge (78, 88) have/has an arcuately rounded profile composed of wave peaks (74, 84) and wave troughs (73, 83).

4. Holding disc (7, 8) according to one of the preceding claims, **characterized in that** the outer circle (AK) has a first diameter (D) and the inner circle (IK) has a second diameter (d), wherein the ratio D/d has a value between 1.1 and 1.5.

5. Holding disc (7, 8) according to Claim 4, **characterized in that** the first diameter (D) of the outer circle (AK) measured in millimetres is in a ratio of between 1:1 and 10:1 with respect to the number of wave troughs (73, 83).

6. Holding disc (7, 8) according to one of the preceding claims, **characterized in that** the wave troughs (73, 83) are formed obliquely with respect to the axis (A).

7. Holding disc (7, 8) according to one of the preceding claims, **characterized in that** the holding portion (71, 81) has a cone-lateral-surface-shaped basic shape.

8. Holding disc (7, 8) according to one of the preceding claims, **characterized in that** the holding portion (71, 81) transitions into a radially inner or radially outer supporting portion (72, 82).

9. Holding disc (7, 8) according to Claim 8, **characterized in that** the supporting portion (72, 82) has an at least sectionally circumferentially encircling annular bead (77, 87).

10. Use of a holding disc (7, 8) according to one of the preceding claims, **characterized in that** the holding disc (7, 8), under radial preload, is inserted coaxially into an internal cylindrical cavity (311) of a steering arrangement (1) and axially supports a bearing arrangement of an element mounted for rotation.

## Revendications

1. Rondelle de retenue (7, 8) pour la fixation axiale d'un composant dans une cavité cylindrique ou sur un arbre cylindrique, la rondelle de retenue (7, 8) présentant une section de retenue en saillie (71, 81) avec une surface frontale (750, 850), la surface frontale (750, 850) étant délimitée par un bord extérieur (75, 85) et un bord intérieur (78, 88), le bord extérieur (75, 85) étant inscrit dans un cercle extérieur (AK) ayant un premier centre (M1) et un cercle intérieur (IK) ayant un deuxième centre (M2) étant inscrit dans le bord intérieur (78, 88), le premier centre (M1) et le deuxième centre (M2) étant situés sur un axe (A), la section de retenue (71, 81) étant inclinée par rapport à l'axe (A) au moins dans la zone de la surface frontale (750, 850),
le bord extérieur (75, 85) et/ou le bord intérieur (78, 88) projeté dans un plan de projection (P2), qui est réalisé parallèle à l'axe (A), s'étendant sous forme sinueuse entre le cercle extérieur (AK) et le cercle intérieur (IK), le premier centre (M1) et le deuxième centre (M2) présentant une distance l'un de l'autre,
**caractérisée en ce que**
une distance axiale (a) entre le bord extérieur (75, 85) et le bord intérieur (78, 88), mesurée dans la direction de l'axe (A), correspond à 1,2 à 3 fois l'épaisseur de matériau (t) de la rondelle de retenue (7) dans la section de retenue (71).

2. Rondelle de retenue (7, 8) selon la revendication 1, **caractérisée en ce que** le bord extérieur (75) et/ou le bord intérieur (78, 88) projeté dans un premier plan de projection (P1), qui est réalisé orthogonal à l'axe (A), et projeté dans un deuxième plan de projection (P2), qui est réalisé parallèle à l'axe (A), s'étend sous forme sinueuse entre le cercle extérieur (AK) et le cercle intérieur (IK).

3. Rondelle de retenue (7, 8) selon la revendication 1 ou 2, **caractérisée en ce que** le bord extérieur (75, 85) et/ou le bord intérieur (78, 88) ont un tracé arrondi en forme d'arc composé de crêtes d'ondulation (74, 84) et de creux d'ondulation (73, 83).

4. Rondelle de retenue (7, 8) selon l'une quelconque des revendications précédentes, **caractérisé en ce que** le cercle extérieur (AK) présente un premier diamètre (D) et le cercle intérieur (IK) un deuxième diamètre (d), le rapport D/d présentant une valeur comprise entre 1,1 et 1,5.

5. Rondelle de retenue (7, 8) selon la revendication 4, **caractérisée en ce que** le premier diamètre (D) du cercle extérieur (AK), mesuré en millimètres, est dans un rapport compris entre 1:1 et 10:1 par rapport au nombre de creux d'ondulation (73, 83).

6. Rondelle de retenue (7, 8) selon l'une quelconque des revendications précédentes, **caractérisée en ce que** les creux d'ondulation (73, 83) sont formés en oblique par rapport à l'axe (A).

7. Rondelle de retenue (7, 8) selon l'une quelconque des revendications précédentes, **caractérisée en ce que** la section de retenue (71, 81) a une forme de base en forme d'enveloppe conique.

8. Rondelle de retenue (7, 8) selon l'une quelconque des revendications précédentes, **caractérisée en ce que** la section de retenue (71, 81) se transforme en une section d'appui (72, 82) située radialement à l'intérieur ou située radialement à l'extérieur.

9. Rondelle de retenue (7, 8) selon la revendication 8, **caractérisée en ce que** la section d'appui (72, 82) présente une moulure annulaire (77, 87) s'étendant au moins par sections dans la direction circonférentielle.

10. Utilisation d'une rondelle de retenue (7, 8) selon l'une quelconque des revendications précédentes, **caractérisée en ce que** la rondelle de retenue (7, 8) est insérée coaxialement sous précontrainte radiale dans une cavité cylindrique intérieure (311) d'un agencement de direction (1) et soutient axialement un agencement de palier d'un élément monté en rotation.
